# NEUE EUROPÄISCHE PATENTSCHRIFT

(11) **EP 1 043 294 B2**
(45) Veröffentlichungstag und Bekanntmachung des Hinweises auf die Entscheidung über den Einspruch: **07.12.2005**
(45) Hinweis auf die Patenterteilung: 06.12.2000
(21) Anmeldenummer: 99107007.9
(22) Anmeldetag: 09.04.1999
(51) Int. Cl.: C04B 41/88

(54) **Glanzedelmetallpräparat**
Bright nobel metal preparation
Préparation brillante de métal précieux

(43) Veröffentlichungstag der Anmeldung: 11.10.2000
(73) Patentinhaber: W.C. Heraeus GmbH, 63450 Hanau (DE)
(72) Erfinder: Lukas, Annette, 63517 Rodenbach (DE); Vogt, Wiltrud, 63741 Aschaffenburg (DE); Wissel, Sabine, 63796 Kahl/Main (DE); Werner, Günter, 63450 Hanau (DE)
(74) Vertreter: Kühn, Hans-Christian

(56) Entgegenhaltungen:
- EP-A- 0 296 312
- EP-A- 0 440 877
- CN-A- 1 072 670
- DE-A- 1 421 865
- US-A- 4 418 099
- DATABASE WPI Section Ch, Week 7840 Derwent Publications Ltd., London, GB; Class L02, AN 78-71510A XP002105740 & JP 53 099211 A (NORITAKE CO LTD) , 30. August 1978
- CHEMICAL ABSTRACTS, vol. 117, no. 12, 21. September 1992 Columbus, Ohio, US; abstract no. 117087j, CHEN, SHENGCHANG: "liquid for coatinggold on ceramics" Seite 344; XP000373337 & JP 02 108071 A
- PATENT ABSTRACTS OF JAPAN vol. 095, no. 004, 31. Mai 1995 & JP 07 014420 A (NORITAKE CO LTD), 17. Januar 1995
- A.A. Milgram, J. Eletrochem Soc. 118, 287 (1971)

## Beschreibung

Die Erfindung betrifft ein Glanzedelmetallpräparat zum Einbrennen auf Keramik-/Porzellan-Oberflächen bei einer Minimaltemperatur von + 900 °C zür Bildüng eines hochglänzenden Edelmetallfilms, insbesondere auf Fliesen, bestehend aus einer oder mehreren organischen Edelmetallverbindungen, mindestens einem Flußmittel aus organischen Metallverbindungen und mindestens einem Träger.

Ferner betrifft die Erfindung ein Verfahren zur Herstellung von dekorierten Keramik-/Porzellan-Oberflächen aufweisenden Gegenständen, insbesondere von Fliesen, durch Einbrennen eines Glanzedelmetallpräparats.

Schließlich betrifft die Erfindung zwei Verwendungen eines erfindungsgemäßen Glanzedelmetallpräparates.

Glanzedelmetallpräparate zur Dekoration von Glas, Keramik, Porzellan, Bone-China, Fliesen oder anderen silikatischen Substraten bestehen in der Regel aus Lösungen organischer Gold-, Palladium- und Platinverbindungen, die in zumeist organischen Trägermaterialien gelöst sind, Kunst- oder Naturharzen sowie Flußmitteln, die die Haftfestigkeit auf dem jeweiligen Trägermaterial sicherstellen. Als Flußmittel werden üblicherweise bestimmte organische Metallverbindungen. z. B. Alkoholate, Carboxylate, Resinate oder Sulforesinate der Elemente Rhodium, Silber, Chrom, Wismut, Vanadium, Silicium usw. verwendet. Beim Einbrennen zersetzen sich die organischen Verbindungen zu den jeweiligen Oxiden oder Metallen, wodurch die Haftfestigkeit des Metallfilms auf dem Substrat bewirkt wird.

Die üblicherweise zur Dekoration verwendeten Glanzedelmetallpräparate werden bei Einbrenntemperaturen von ca. 780 °C bis 900 °C auf Keramik, Porzellan, Fliesen oder Bone-China eingebrannt, in Ausnahmefällen auch bis ca. 1000 °C. Oberhalb dieser Brenntemperatur wird die zusammenhängende Goldschicht von Glanzedelmetallpräparaten zerstört, indem die Goldschicht rekristallisiert und kleine Kristalle bildet, was sich in einem matten, braunen Aussehen der Edelmetallschicht, insbesondere bei einer Goldschicht, zeigt.

In den letzten Jahren gab es bei der Dekoration von Keramik und Porzellan, insbesondere von Fliesen, zunehmend Bemühungen, Farbdekore sowie transparente oder opake Glasreliefs bei hohen Brenntemperaturen einzubrennen. Beispielsweise ist es bei Porzellan üblich, Hochtemperatur-Schnellbrandfarben bei ca. 1200 °C im 60- bis 90-Minuten-Brennzyklus einzubrennen. Fliesen werden mit sogenannten "Vetrosa"-Effekten überwiegend bei ca. 980 °C bis 1060 °C gebrannt. Diese hohen Brenntemperaturen sind erforderlich, um ein ausreichendes Verschmelzen der Farben bzw. Reliefs mit dem Untergrund sicherzustellen.

In der jüngsten Vergangenheit sind Präparate entwickelt worden, die für hohe Einbrenntemperaturen für die oben geschilderten Anwendungen geeignet sind, d. h. für ca. 1200 °C auf Porzellan bzw. ca. 1000 °C für Fliesendekorationen.

In EP 0 440 877 B1 sind bereits Edelmetall-Präparate beschrieben, die als Flußmittel Nickel- und Chromresinat enthalten und sich für Einbrenntemperaturen bis ca. 1200 °C auf Porzellan eignen.

In DE 37 36 583 sind ebenfalls Glanzedelmetallpräprate beschrieben, die bei 1250 °C auf Geschirrteilen aus silikatischen Werkstoffen eingebrannt werden können. Das in dem Präparat enthaltene Flußmittel setzt sich aus einer organischen Siliciumverbindung mit drei und/oder vier hydrolysierbaren Gruppen am Siliciumatom und weiteren organischen Metallverbindungen zusammen.

Die oben beschriebenen, für hohe Einbrenntemperaturen sich eignenden Glanzedelmetallpräparate enthalten als Flußmittel u. a. Rhodium. In der Literatur (siehe A. Boettcher, Ber. D. Keram. Ges. 32 (1955), 175; S.G. Tumanov, Steklo i Keramika 18 (1961), 26; A.A. Milgram, J. Electrochem. Soc. 118 (1971), 287; P.A. Levin, Steklo i Keramika 3 (1968), 36) wird klar hervorgehoben, daß das Element Rhodium ein unverzichtbarer Bestandteil von Glanzedelmetallpräparaten ist, insbesondere, wenn das Präparat bei höheren Temperaturen eingebrannt werden soll. Das Element Rhodium ist beim Einbrennen notwendig, um das Agglomerieren und Kornwachstum der sich aus den organischen Goldverbindungen bildenden Goldpartikel zu verhindern, um auf diese Art und Weise die Ausbildung eines gleichförmigen, spiegelnden Glanzedelmetallfilms, insbesondere eines Glanzgoldfilms, zu ermöglichen. Die relativ teuren rhodiumhaltigen Präparate sind besonders temperaturbeständig und bis 850 °C brennstabil.

In DE 41 30 106 C2 ist ein Edelmetallpräparat beschrieben, das eine stark reduzierte Rhodiummenge enthält. Als Ersatz für das Element Rhodium wird Thorium empfohlen, das sich jedoch wegen seiner Radioaktivität nicht für Dekorpräparate eignet.

Aus dem Vorgenannten ergibt sich das Problem, mit Hilfe eines neuartigen Glanzedelmetallpräparats und eines entsprechenden Herstellungsverfahrens die oben genannten Nachteile zumindest teilweise zu beseitigen. Das sich ergebende Problem liegt insbesondere darin, ein besonders einbrennstabiles Glanzedelmetallpräparat zur Verfügung zu stellen, das besonders intensiv bzw. hellglänzende Edelmetallfilme, insbesondere Gold- und Weißgoldfilme, nach dem Einbrennen auf Keramik. Porzellan, insbesondere auf Fliesen oder anderen silikatischen Unterlagen, ergibt.

Dieses Problem wird erfindungsgemäß durch ein Glanzedelmetallpräparat nach Anspruch 1, ein Verfahren nach Anspruch 8, eine Verwendung nach Anspruch 10 und eine Verwendung nach Anspruch 9 gelöst.

Das erfindungsgemäße Glanzedelmetallpräparat ist rhodiumfrei, enthält mindestens eine organische Gold-, Platin-, Silber- oder Palladium-Verbindung, weist Cr und Si und/oder Ni in Form mindestens einer organischen Verbindung auf, wobei der Cr-Gehalt 0,01 bis 1,0 Mol Cr pro Mol Edelmetall beträgt, und der Edelmetallgehalt, bezogen auf das Präparat, im Bereich von 6 bis 20 Gewichts-%, liegt.

Kem der Erfindung ist die überraschende Tatsache, daß entgegen der existierenden Lehre rhodiumfreie Präparate das oben aufgeführte Problem in hervorrragender Weise lösen, wenn diese Chrom und Si und/oder Ni in den angegebenen Molverhältnissen enthalten.

Für die erfindungsgemäßen Präparate sind alle Edelmetallverbindungen geeignet, die sich in einem organischen oder anorganischen insbesondere wäßrigen Trägermaterial lösen oder dispergieren und die sich thermisch zu den jeweiligen Metallen zersetzen lassen; insbesondere Resinate, Sulforesinate, Carboxylate, primäre, sekundäre oder tertiäre aliphatische Mercaptide, aromatische Mercaptide, Mercaptocarboxylsäureester, Mercaptoaminocarboxylate sind geeignete Verbindungsklassen.

Als Flußmittel sind prinzipiell alle Verbindungen der oben genannten Nichtedelmetallelemente geeignet, die sich im Trägermaterial lösen oder dispergieren lassen und die sich unabhängig von ihrer Struktur beim Einbrennen von den jeweiligen Oxiden zersetzen. Dies sind insbesondere die Carboxylate Resinate, Sulforesinate, Alkoholate, aber auch andere Salze oder Komplexe der jeweiligen Elemente.

Die erfindungsgemäßen Präparate können auf Keramik und Porzellan bei Temperaturen von 900 °C bis 1300 °C und auf Fliesen von 900 °C bis zu 1100 °C in 30- bis 90-minütigen Brennzyklen eingebrannt werden, ohne daß metallische Edelmetallfilme insbesondere Goldfilme zerstört werden. Die eingebrannten Edelmetallfilme zeichnen sich durch einen schönen, hellen Farbton und eine hervorragende Abriebbeständigkeit aus, wobei die Präparate der oben genannten Art darüber hinaus mikrowellenbeständig sind.

Das Glanzedelmetallpräparat kann mit dem Pinsel oder auch im Siebdruck direkt auf das zu dekorierende Geschirrteil aufgebracht werden. Die indirekte Übertragung des Präparats über Abziehbilder ist ebenso möglich.

Auch die Erzielung von matten oder seidenmatten Effekten durch Zugabe von Mattierungsmitteln, beispielsweise Polyethylenwachse und Mineralien, ist problemlos möglich.

In vorteilhafter Weise ist die Einbrennbeständigkeit besonders hoch, wenn der Cr-Gehalt 0,05 bis 0,4 Mol Cr pro Mol Edelmetall beträgt.

Für eine besonders hohe Abriebfestigkeit bei gleichzeitig modifiziertem Edelmetall-Farbton weist das Präparat mindestens ein weiteres Element aus der Gruppe Si und Ni in Form organischer Verbindungen auf, wobei der Gesamtgehalt an Si, Cr und Ni 0,2 bis 2,0 Mol pro Mol Edelmetall beträgt; dies gilt insbesondere für einen Gesamtgehalt an Si, Cr und Ni von 0,25 bis 1,50 Mol pro Mol Edelmetall.

Es ist von Vorteil, wenn das Präparat mindestens ein weiteres Element aus der Gruppe Cu, Co, Sn, Zr und Bi in Form organischer Verbindungen aufweist, wobei der Gehalt an Cu, Co, Sn, Zr und Bi jeweils bis 0,3 Mol pro Mol Edelmetall beträgt, da auf diese Art und Weise eine Modifizierung bestimmter Eigenschaften insbesondere von Farbe zu erreichen ist.

In vorteilhafter Weise weist das Präparat mindestens ein weiteres Element aus der Gruppe B, Al, Ca, Ti, V, Mn, Fe, Zn, Ge, Pb, Sr, Ru, In, Ba, Ta, W, Os, Ir und Ce in Form organischer Verbindungen auf, wobei der Gehalt an B, Al, Ca, Ti, V, Mn, Fe, Zn, Ge, Pb, Sr, Mo, Ru, In, Ba, Ta, W, Os, Ir und Ce jeweils bis 0,3 Mol pro Mol Edelmetall beträgt, da hierdurch eine leichte Veränderung der Glanz- und Farbtoneigenschaften zu bewerkstelligen ist.

Darüber hinaus ist es von besonderem Vorteil, wenn der Edelmetallgehalt, bezogen auf das Präparat, im Bereich von 6 bis 14 Gewichts-% liegt, da sich in diesem Bereich einerseits besonders effektvolle Metallfilme erzeugen lassen, die andererseits bezüglich des Edelmetallverbrauchs als ökonomisch sinnvoll anzusehen sind.

Schließlich ist es vorteilhaft, wenn das erfindungsgemäße Glanzedelmetallpräparat thoriumfrei ist, um dieses nicht radioaktiv zu belasten und somit eine unbedenkliche Verwendung als Dekor zu gewährleisten.

Beim erfindungsgemäßen Verfahren zur Herstellung von dekorierten Keramik-/Porzellanoberflächen aufweisenden Gegenständen, insbesondere von Fliesen, durch Einbrennen eines Glanzedelmetallpräparates wird zunächst ein erfindungsgemäßes Glanzedelmetallpräparat auf eine entsprechende Oberfläche eines Gegenstandes aufgebracht und anschließend in einem Temperaturbereich von 900 °C bis 1300 °C eingebrannt.

Die nach dem erfindungsgemäßen Verfahren hergestellten und dekorierten Gegenstände weisen die oben angegebenen überraschenden und vorteilhaften Eigenschaften insbesondere den intensiven Edelmetallfilmglanz auf.

Die nachfolgenden Beispiele dienen zur Erläuterung der Erfindung.

### Beispiel 1

Ein Glanzgoldpräparat, bestehend aus

| | |
|---|---|
| Goldsulforesinat (54 % Au) | 18.5 Gewichts-% |
| Chromresinat (10 % Cr) | 5,0 Gewichts-% |
| Siliciumresinat gelöst in Pine-Öl (10 % Si) | 5,0 Gewichts-% |
| Nickelresinat (10 % Ni) | 5,0 Gewichts-% |
| geschwefeltes Terpentinöl | 30,0 Gewichts-% |
| Xylol | 15,0 Gewichts-% |
| Pine-Öl | 21,5 Gewichts-%, |

wird mit dem Pinsel auf Porzellan-, Bone-China-Teller oder auf Fliesen aufgetragen und analog den in Beispiel 2 beschriebenen Brennbedingungen gebrannt. Es bildet sich ein gelbgoldener, hochglänzender, sehr abriebsfester Goldfilm.

Es bildet sich ein gelbgoldener, hochglänzender Goldfilm mit sehr guter Haftfestigkeit. Der erzeugte Dekor ist mikrowellenbeständig und wird zu Prüfzwecken mehrmals einer Leistung von 700 W für 15 Minuten im Mikrowellenherd ausgesetzt. Es zeigen sich keinerlei Funken oder andere Beschädigungen.

Für die Fliesendekoration wird das Präparat auf Fliesen mittels Siebdruckverfahren aufgedruckt und bei 1050 °C eingebrannt. Es bildet sich ein gelbgoldener, hochglänzender, rissefreier Goldfilm von hoher Abriebbeständigkeit.

### Beispiel 2

Ein Glanzgoldpräparat, bestehend aus

| | |
|---|---|
| Goldsulforesinat (54 % Au) | 18,5 Gewichts-% |
| Chromresinat (10 % Cr) | 5,0 Gewichts-% |
| Siliciumresinat in Pine-Öl (10 % Si) | 5,0 Gewichts-% |
| Nickelresinat (10 % Ni) | 5,0 Gewichts-% |
| geschwefeltes Terpentinöl | 30,0 Gewichts-% |
| Pine-Öl | 26,5 Gewichtts-% |
| geschwefeltes Dammarharz | 10,0 Gewichts-%, |

wird im Siebdruckverfahren auf Porzellan-Teller bzw. Bone-China-Teller aufgedruckt und bei 1200 °C bzw. 900 °C eingebrannt.

Es bildet sich ein gelbgoldener, hochglanzender Goldfilm mit sehr guter Haftfestigkeit. Der erzeugte Dekor ist mikrowellenbeständig und wird zu Prüfzwecken mehrmals einer Leistung von 700 W für 15 Minuten im Mikrowellenherd ausgesetzt. Es zeigen sich keinerlei Funken oder andere Beschädigungen.

Für die Fliesendekoration wird das Präparat auf Fliesen mittels Siebdruckverfahren aufgedruckt und bei 1050 °C eingebrannt. Es bildet sich ein gelbgoldener, hochglänzender, rissefreier Goldfilm von hoher Abriebbeständigkeit.

## Patentansprüche

1. Glanzedelmetallpräparat zum Einbrennen auf Keramik-/Porzellan-Oberflächen bei einer Minimaltemperatur von + 900 °C zur Bildung eines hochglänzenden Edelmetallfilms**,** insbesondere auf Fliesen, bestehend aus einer oder mehreren organischen Edelmetallverbindungen, mindestens einem Flussmittel aus organischen Metallverbindungen und mindestens einem Träger, **dadurch gekennzeichnet, dass** das Glanzedelmetallpräparat
- rhodiumfrei ist,
- mindestens eine organische Gold-, Platin-, Silber- oder Palladium-Verbindung enthält,
- Cr in Form mindestens einer organischen Verbindung aufweist, wobei der Cr-Gehalt 0,01 bis 1,0 Mol Cr pro Mol Edelmetall beträgt,
- mindestens ein weiteres Element aus der Gruppe Si und Ni in Form organischer Verbindungen aufweist, wobei der Gesamtgehalt an Si, Cr und Ni 0,2 bis 2,0 Mol pro Mol Edelmetall beträgt, und
- der Edelmetallgehalt, bezogen auf das Präparat, im Bereich von 6 bis 20 Gewichts-% liegt.

2. Glanzedelmetallpräparat nach Anspruch 1, **dadurch gekennzeichnet, dass** der Cr-Gehalt 0,05 bis 0,4 Mol Cr pro Mol Edelmetall beträgt.

3. Glanzedelmetallpräparat nach Anspruch 2, **dadurch gekennzeichnet, dass** der Gesamtgehalt an Si, Cr und Ni 0,25 bis 1,50 Mol pro Mol Edelmetall beträgt.

4. Glanzedelmetallpräparat nach einem der Ansprüche 1 bis 3, **dadurch gekennzeichnet, dass** dieses mindestens ein weiteres Element aus der Gruppe Cu, Co, Sn, Zr und Bi in Form organischer Verbindungen aufweist, wobei der Gehalt an Cu, Co, Sn, Zr und Bi jeweils bis 0,3 Mol pro Mol Edelmetall beträgt.

5. Glanzedelmetallpräparat nach einem der Ansprüche 1 bis 4, **dadurch gekennzeichnet, dass** dieses mindestens ein weiteres Element aus der Gruppe B, Al, Ca, Ti, V, Mn, Fe, Zn, Ge, Pb, Sr, Mo, Ru, In, Ba, Ta, W, Os, Ir und Ce in Form organischer Verbindungen aufweist, wobei der Gehalt an B, Al, Ca, Ti, V, Mn, Fe, Zn, Ge, Pb, Sr, Mo, Ru, In, Ba, Ta, W, Os, Ir und Ce jeweils bis 0,3 Mol pro Mol Edelmetall beträgt.

6. Glanzedelmetallpräparat nach einem der Ansprüche 1 bis 5, **dadurch gekennzeichnet, dass** der Edelmetallgehalt, bezogen auf das Präparat, 6 bis 14 Gewichts-% beträgt.

7. Glanzedelmetallpräparat nach einem der Ansprüche 1 bis 6, **dadurch gekennzeichnet, dass** dieses thoriumfrei ist.

8. Verfahren zur Herstellung von dekorierten Keramik-/Porzellanoberflächen aufweisenden Gegenständen, insbesondere von Fliesen, durch Einbrennen eines Glanzedelmetallpräparats zur Bildung eines hochglänzenden Edelmetallfilms, **dadurch gekennzeichnet, dass** ein Glanzedelmetallpräparat nach einem der Ansprüche 1 bis 7 in einem Temperaturbereich von 900 °C bis 1300 °C eingebrannt wird.

9. Verwendung eines Glanzedelmetallpräparates nach einem der Ansprüche 1 bis 7 zur Dekorierung von Keramik-/Porzellanoberflächen aufweisenden Gegenständen, insbesondere von Fliesen.

10. Verwendung eines Glanzedelmetallpräparates nach einem der Ansprüche 1 bis 7 zum Einbrennen auf Keramik-/Porzellanoberflächen aufweisenden Gegenständen in einem Temperaturbereich von 900 °C bis 1.300 °C.

## Claims

1. Bright noble metal preparation for firing onto ceramic/porcelain surfaces at a minimum temperature of +900°C for the formation of a very bright noble metal film, in particular onto tiles, consisting of one or more organic noble metal compounds, at least one flux of organic metal compounds and at least one carrier, **characterized in that** the bright noble metal preparation
- is rhodium-free,
- contains at least one organic gold, platinum, silver or palladium compound,
- comprises Cr in the form of at least one organic compound, the Cr content being 0.01 to 1.0 mol of Cr per mol of noble metal,
- comprises at least one further element from the group consisting of Si and Ni in the form of organic compounds, the total content of Si, Cr and Ni being 0.2 to 2.0 mol per mol of noble metal, and
- the noble metal content is in the range from 6 to 20% by weight, based on the preparation.

2. Bright noble metal preparation according to Claim 1, **characterized in that** the Cr content is 0.05 to 0.4 mol of Cr per mol of noble metal.

3. Bright noble metal preparation according to Claim 2, **characterized in that** the total content of Si, Cr and Ni is 0.25 to 1.50 mol per mol of noble metal.

4. Bright noble metal preparation according to any of Claims 1 to 3, **characterized in that** it comprises at least one further element from the group consisting of Cu, Co, Sn, Zr and Bi in the form of organic compounds, the content of Cu, Co, Sn, Zr and Bi being in each case up to 0.3 mol per mol of noble metal.

5. Bright noble metal preparation according to any of Claims 1 to 4, **characterized in that** it comprises at least one further element from the group consisting of B, Al, Ca, Ti, V, Mn, Fe, Zn, Ge, Pb, Sr, Mo, Ru, In, Ba, Ta, W, Os, Ir and Ce in the form of organic compounds, the content of B, Al, Ca, Ti, V, Mn, Fe, Zn, Ge, Pb, Sr, Mo, Ru, In, Ba, Ta, W, Os, Ir and Ce being in each case 0.3 mol per mol of noble metal.

6. Bright noble metal preparation according to any of Claims 1 to 5, **characterized in that** the noble metal content is 6 to 14% by weight, based on the preparation.

7. Bright noble metal preparation according to any of Claims 1 to 6, **characterized in that** it is thorium-free.

8. Process for the production of decorated articles having ceramic/porcelain surfaces, in particular of tiles, by firing on a bright noble metal preparation for the formation of a very bright noble metal film, **characterized in that** a bright noble metal preparation according to any of Claims 1 to 7 is fired on in a temperature range of 900°C to 1300°C.

9. Use of a bright noble metal preparation according to any of Claims 1 to 7 for decoration of articles having ceramic/porcelain surfaces, in particular of tiles.

10. Use of a bright noble metal preparation according to any of Claims 1 to 7 for firing onto articles having ceramic/porcelain surfaces in a temperature range of 900°C to 1300°C.

## Revendications

1. Préparation brillante de métal précieux pour une cuisson sur des surfaces de céramique/porcelaine à une température minimale de + 900°C pour la formation d'un film de métal précieux hautement brillant, en particulier sur des carrelages, constituée d'un ou plusieurs composés organiques de métaux précieux, d'au moins un fondant constitué de composés organométalliques et d'au moins un véhiculeur, **caractérisée en ce que** la préparation brillante de métal précieux :
- est exempte de rhodium,
- contient au moins un composé organique de l'or, du platine, de l'argent ou du palladium,
- présente Cr dans la forme d'au moins un composé organique, la teneur en Cr étant de 0,01 à 1,0 mole de Cr par mole de métal précieux,
- présente au moins un autre élément du groupe Si et Ni sous forme de composés organiques, la teneur totale en Si, Cr et Ni étant 0,2 à 2,0 moles par mole de métal précieux, et
- la teneur en métal précieux, rapportée à la préparation, est dans le domaine de 6 à 20 % en poids.

2. Préparation brillante de métal précieux selon la revendication 1, **caractérisée en ce que** la teneur en Cr est de 0,05 à 0,4 mole de Cr par mole de métal précieux.

3. Préparation brillante de métal précieux selon la revendication 2, **caractérisée en ce que** la teneur totale en Si, Cr et Ni est de 0,25 à 1,50 mole par mole de métal précieux.

4. Préparation brillante de métal précieux selon l'une quelconque des revendications 1 à 3, **caractérisée en ce que** celle-ci présente au moins un autre élément choisi parmi Cu, Co, Sn, Zr et Bi dans la forme de composés organiques, la teneur en Cu, Co, Sn, Zr et Bi allant à chaque fois jusqu'à 0,3 mole par mole de métal précieux.

5. Préparation brillante de métal précieux selon l'une quelconque des revendications 1 à 4, **caractérisée en ce que** celle-ci présente au moins un autre élément choisi parmi B, Al, Ca, Ti, V, Mn, Fe, Zn, Ge, Pb, Sr, Mo, Ru, In, Ba, Ta, W, Os, Ir et Ce dans la forme de composés organiques, la teneur en B, Al, Ca, Ti, V, Mn, Fe, Zn, Ge, Pb, Sr, Mo, Ru, In, Ba, Ta, W, Os, Ir et Ce allant à chaque fois jusqu'à 0,3 mole par mole de métal précieux.

6. Préparation brillante de métal précieux selon l'une quelconque des revendications 1 à 5, **caractérisée en ce que** la teneur en métal précieux, rapportée à la préparation, est de 6 à 14 % en poids.

7. Préparation brillante de métal précieux selon l'une quelconque des revendications 1 à 6, **caractérisée en ce que** celle-ci est exempte de thorium.

8. Procédé pour la préparation d'objets présentant des surfaces décorées de céramique/porcelaine, en particulier de carrelages, par cuisson d'une préparation brillante de métal précieux, pour la formation d'un film de métal précieux hautement brillant, **caractérisé en ce que** l'on cuit une préparation brillante de métal précieux selon l'une quelconque des revendications 1 à 7 dans un domaine de température de 900°C à 1 300°C.

9. Utilisation d'une préparation brillante de métal précieux selon l'une quelconque des revendications 1 à 7 pour la décoration d'objets présentant des surfaces de céramique/porcelaine, en particulier de carrelages.

10. Utilisation d'une préparation brillante de métal précieux selon l'une quelconque des revendications 1 à 7 pour la cuisson sur des objets présentant des surfaces de céramique/porcelaine dans un domaine de température de 900°C à 1 300°C.
